(19) Europäisches Patentamt
European Patent Office
Office européen des brevets

(11) **EP 0 388 913 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(51) Int Cl.$^6$: **C08G 59/14**, C08L 61/10, C08L 63/00, C09D 161/14, C08L 61/14

(21) Anmeldenummer: **90105321.5**

(22) Anmeldetag: **21.03.1990**

(54) **Bindemittel, ihre Herstellung und Anwendung in härtbaren Mischungen**

Binders, their preparation and use in hardenable compositions

Liants, leur préparation et leur utilisation dans des compositions durcissables

(84) Benannte Vertragsstaaten:
**DE**

(30) Priorität: **23.03.1989 DE 3909593**

(43) Veröffentlichungstag der Anmeldung:
**26.09.1990 Patentblatt 1990/39**

(73) Patentinhaber: **HOECHST AKTIENGESELLSCHAFT 65926 Frankfurt am Main (DE)**

(72) Erfinder:
• **Gräff, Hans** verstorben (DE)
• **Has, Adam** D-6503 Mainz-Kastel (DE)

• **Hesse, Wolfgang, Dr.** D-6204 Taunusstein (DE)

(74) Vertreter: **Zounek, Nikolai, Dipl.-Ing. Patentanwaltskanzlei Zounek, Industriepark Kalle Albert, Gebäude H287 65203 Wiesbaden (DE)**

(56) Entgegenhaltungen:
**GB-A- 692 937        US-A- 4 308 185**

• **ULLMANNS ENCYKLOPäDIE DER TECHNISCHEN CHEMIE Band 18, 4. Auflage, Seiten 245-256; W. HESSE: "Phenolharze"**

**Beschreibung**

Aus der EP-Offenlegungsschrift 87 454 ist es bekannt, kationische Epoxidharzpräkondensate, die nach Protonisierung auch wasserverdünnbar sein können, herzustellen. Diese und auch andere kationischen Epoxidharz-Kombinationen haben aber den Nachteil, daß sie bei der Anwendung für die Innenlackierungen von Lebensmittel- oder Getränkebehältern aufgrund ihres kationischen Charakters gegen saure Füllgüter nur unzureichend beständig sind. Oft liegen die wasserverdünnbaren kationischen Epoxidharz-Kombinationen als Dispersionen vor, wobei sich bei der Applikation, beispielweise nach dem Walz- oder Sprühlackierverfahren, zusätzliche Schwierigkeiten, z.B. durch Streifenbildung auf dem Substrat ergeben.

Anionische, carboxylgruppenhaltige Bindemittel auf Basis von Epoxidharzen zum Einsatz in Lacken für die Innenbeschichtung von Lebensmittel-/Getränkebehältern werden in den US-Patentschriften 4.212.781 und 4.308.185 beschrieben. Die Einführung der Carboxylgruppen erfolgt dabei durch Aufpfropfung von (Meth)acrylsäure, gegebenenfalls in Abmischung mit anderen copolymerisierbaren Monomeren, auf das Epoxidharz. Neben der Pfropfreaktion läuft dabei auch eine Homo(Co)polymerisation ab, wodurch das resultierende Produkt eine Mischung aus Pfropfpolymeren, unverändertem Epoxidharz und Homo(Co)polymerisat darstellt. Nachteilig ist bei diesen Systemen u.a., daß der Festkörpergehalt der wäßrigen Lacke relativ gering und der Anteil an organischem (Hilfs-)Lösemittel relativ hoch ist. Außerdem bedürfen sie zusätzlicher Vernetzer, die bei der Vernetzung Schadstoffe abspalten.

Weiterhin sind aus Ullmann, 4. Auflage, Band 18, Seiten 251/252 anionische, wasserverdünnbare Phenolharze bekannt, die z.B. durch Kondensationsreaktionen von Resolen mit Halogenalkansäuren entstehen. Diese liefern aber nach der Vernetzung Überzüge, die starr und spröde sind und sich deswegen nur für nichtverformbare Substrate eignen. Zur Plastifizierung werden diese anionisch modifizierten Resole mit Polyaddukten aus Polymerölen mit Maleinsäureanhydrid modifiziert. Solche wasserverdünnbaren Lacke eignen sich wegen ihrer geringen Oberflächenhärte, der Abgabe von Geschmackstoffen, ihrer ungenügenden Sterilisationsfestigkeit sowie ihres Restmonomergehaltes nicht als Innenlacke für Lebensmittel oder Getränkebehälter. Außerdem bedürfen sie wegen der geringen Säurestärke der Maleinsäureanhydrid-Addukte eines übermäßig hohen Gehaltes an Carboxylgruppen.

Ziel der Erfindung war es daher, ein Bindemittel für Lackzubereitungen zum Einsatz insbesondere auf dem Lebensmittel-/Getränkesektor bereitzustellen, das vorstehende Nachteile nicht oder zumindest nur in vermindertem Umfange aufweist und das insbesondere Lackzubereitungen bzw. Beschichtungen ermöglicht mit guten Applikationseigenschaften sowie geringer Schadstoffabspaltung und guter Sterilisationsbeständigkeit.

Es wurde nun gefunden, daß bestimmte hydroxyl- und carboxylgruppenhaltige Addukte aus Polyepoxidverbindungen (Epoxidharzen) und Polyalkylidenphenolen (Novolaken) überraschenderweise diese vorteilhaften Eigenschaften besitzen.

Die Erfindung betrifft daher ein Verfahren zur Herstellung eines Bindemittels (A) gemäß Anspruch 1, das Bindemittel erhältlich nach dem Verfahren und härtbare Mischungen enthaltend das Bindemittel.

Das erfindungsgemäße Bindemittel (A) besitzt ein mittleres Molekulargewicht $\overline{M}n$ (Zahlenmittel; bestimmt mittels Gelchromatographie; Phenolharzstandard) von im allgemeinen zwischen 300 und 6 000, vorzugsweise zwischen 400 und 4 000, während das Gewichtsmittel $\overline{M}_w$ im allgemeinen zwischen 1 500 und 120 000, vorzugsweise zwischen 2 400 und 72 000, und die Dispersität (Molekulargewichts-Uneinheitlichkeit) zwischen 5,0 und 20, vorzugsweise zwischen 6 und 18 liegt. Die Viskositäten der wäßrigen Lösungen von (A) betragen bei einem Gehalt an (A) von 30 bis 50 Gew.-% 20 bis 10 000, vorzugsweise 50 bis 5 000 mPa·s/20 °C.

Im allgemeinen weist das erfindungsgemäße Bindemittel (A) Hydroxylzahlen im Bereich von 100 bis 540, vorzugsweise von 200 bis 400 und Säurezahlen im Bereich von 10 bis 250, vorzugsweise von 10 bis 150 auf. Die Zahl an Carboxylgruppen pro Molekül ist dabei vorzugsweise so hoch, daß das Bindemittel(A)-zumindest nach Neutralisation dieser Carboxylgruppen - in Wasser oder in Gemischen aus Wasser und bis zu 20 Gew.-% organischen (Hilfs)Lösemitteln dispergierbar oder vorzugsweise sogar (kolloidal) löslich ist.

Die Carboxylgruppen liegen dabei in (A) in Form von Carboxylalkylen- und/oder Carboxyalkylidengruppen, vorzugsweise als Carboxymethylengruppen, vor und sind praktisch ausschließlich an die Polyalkylidenphenole (B) und an die Struktureinheiten (b) in den Polyadditionsprodukten (C) gebunden.

Bei den Hydroxylgruppen im Bindemittel (A) handelt es sich um phenolische OH-Gruppen in (B) und gegebenenfalls in den Struktureinheiten (b), sowie gegebenenfalls um Methylolgruppen in (B) und (b) und um aliphatische OH-Gruppen in den Struktureinheiten (d).

Die Komponenten (B) und (C) liegen in dem erfindungsgemäßen Bindemittel (A) im wesentlichen als physikalische Mischung vor; der Gelanteil in (A) beträgt in der Regel weniger als Gew.-%, vorzugsweise weniger als 1 Gew.-%..

Die Menge an (B) im Bindemittel (A) beläuft sich zumeist auf etwa 15 bis 70 Gew.-%, vorzugsweise etwa 25 bis 55 Gew.-%, bezogen auf (B) und (C).

Die Polyalkylidenphenole (B) besitzen Kondensationsgrade von vorzugsweise 2,5 bis 6,0 und mittlere Molekulargewichte $M_n$ im allgemeinen von 250 bis 1000, vorzugsweise von 300 bis 800. Diese Polyalkylidenphenole weisen neben phenolischen OH-Gruppen Carboxyalkylen- und/oder Carboxyalkylidengruppen auf, wobei letztere aus den phenolischen OH-Gruppen durch den Umsatz mit der Halogencarbonsäure in der zweiten Stufe des erfindungsgemäßen Verfahrens entstehen. Die Zahl an am aromatischen Kern gebundenen O-Atomen (d. h. die Summe aus phenolischen OH-Gruppen und Carboxyalkylen-/ Carboxyalkylidengruppen liegt im allgemeinen mindestens bei 2,3, vorzugsweise bei 2,5 bis 6. Das Verhältnis dieser am aromatischen Kern gebundenen O-Atome zu den Carboxylgruppen in (B) liegt bei 1 : 0,05 bis 1 : 0,9, vorzugsweise 1 : 0,1 bis 1 : 0,8 und dasjenige dieser am aromatischen Kern gebundenen O-Atome zu den Methylolgruppen bei 1:0,1 bis 1:1,5 vorzugsweise 1:0,15 bis 1:1, sofern durch nachträgliche Umsetzung Methylolgruppen in das Bindemittel (A) eingeführt werden (siehe Seite 9, Zeile 26 ff.).

Der Gehalt an nicht umgesetzten Phenolen in (B) überschreitet üblicherweise nicht 0,2 Gew.-% und liegt vorzugsweise bei weniger als 0,1 Gew.-%.

Die Polyadditionsprodukte (C) bestehen im wesentlichen aus den Struktureinheiten (b) und (d) sowie gegebenenfalls aus weiteren Struktureinheiten an den Molekülketten-Enden, die sich von dem eventuell eingesetzten Kettenstopper ableiten.

Je nach Zahl der phenolischen OH-Gruppen in dem Polyalkylidenpolyphenol (B) und dem Mengenverhältnis von (B) zu Epoxidverbindung (D) bei der Herstellung von (C) können in der Molekülkette von (C) zwei oder mehr Struktureinheiten (b) enthalten sein, d.h. (bei (b) > 2) kommt es zur Kettenverlängerung von (D).

Das Zahlenverhältnis von (d) zu (b) im Polyadditionsprodukt (C) beträgt im allgemeinen 1 : >1, vorzugsweise 1 : 1,1 bis 1 : 2. Die Molekularmasseverteilung $\overline{M}_n$ von (C) liegt in der Regel zwischen 1 100 und 100 000.

Die Herstellung des erfindungsgemäßen Bindemittels (A) erfolgt in der Weise, daß man Polyalkylidenpolyphenole (B') und die Epoxidverbindungen (D) in der Schmelze oder in Gegenwart eines Verdünnungsmittels und gegebenenfalls in Gegenwart eines Katalysators bei erhöhten Temperaturen umsetzt, wobei das Äquivalentverhältnis der Epoxidgruppen von (D) und der phenolischen Hydroxylgruppen von (B') zwischen 1: 4 und 1:100 liegt, und daß dann in einer zweiten Stufe das erhaltene Produkt mit einer Halogencarbonsäure und gegebenenfalls mit Formaldehyd in Anwesenheit eines basischen Katalysators und gegebenenfalls eines Lösungs-(Verdünnungs-) Mittels zur Reaktion gebracht und anschließend das so erhaltene Bindemittel (A), gegebenenfalls nach entsprechender Reinigung, isoliert wird.

Die Polyalkylidenphenole (B') entsprechen im Aufbau den Polyalkylidenphenolen (B), besitzen jedoch im Unterschied hierzu keine Carboxylgruppen und - sofern in (B) vorhanden - auch keine Methylolgruppen.

Die Herstellung dieser Polyalkylidenphenole (B') erfolgt in bekannter Weise durch (Co-)Kondensation von ein- oder mehrwertigen, gegebenenfalls alkylsubstituierten Phenolen mit Aldehyden, die im allgemeinen C-Zahlen von 1 bis 12, vorzugsweise 1 bis 9 und insbesondere 1 oder 2 aufweisen, in Gegenwart von Katalysatoren, wobei das jeweilige Phenol im Überschuß eingesetzt wird. Die Phenole sind vorzugsweise gegenüber den Aldehyden trifunktionell. Als Beispiele seien hier genannt: Phenol, m-Kresol, 3,5-Dimethylphenol; weiterhin bifunktionelle Phenole, wie 1,3,4-Xylenol, und o(p)-Alkylphenole, wie o(p)-Kresol etc.. Die Verwendung von Phenol ist dabei bevorzugt. Von den Aldehyden wird vorzugsweise Formaldehyd eingesetzt. Daneben kommen auch Acetaldehyd, Propionaldehyd, Butyraldehyd, Isobutyraldehyd, Valeraldehyd, Hexyl-, Heptyl-, Octyl-, Nonyl- und Decylaldehyd und ihre Isomeren in Frage. Als Katalysatoren dienen insbesondere saure Katalysatoren, wie Protonensäuren, beispielsweise Schwefelsäure, Phosphorsäure, Salzsäure oder Lewissäuren, beispielsweise Bortrifluorid oder Aluminiumphenolat.

Das überschüssige Phenol wird nach der Kondensationsreaktion weitgehend, zum Beispiel durch Vakuum-Destillation, entfernt. Der Kondensationsgrad kann aus der Ausbeute berechnet oder aus dem Zahlenmittel der Molekularmasseverteilung bestimmt werden. Bezüglich weiterer Einzelheiten der Herstellung dieser Polyalkylidenphenole (B') sei u.a. auf Wagner/ Sarx "Lackkunstharze" (5. Auflage; 1971), Hanser Verlag, Seiten 24-59 sowie auf Ullman, 4. Auflage, Band 18, Seiten 250/252 verwiesen.

Die Epoxidverbindungen entsprechend (D) besitzen vorzugsweise im Mittel zwei Epoxidgruppen pro Molekül und ein mittleres Epoxidäquivalentgewicht von 300 bis 5000, vorzugsweise 400 bis 4000. Das mittlere Molekulargewicht Mn liegt im allgemeinen zwischen 600 und 10000, vorzugsweise 800 und 8000. Vorzugsweise handelt es sich bei den Epoxidverbindungen um Polyglycidylether (Epoxidharze), hergestellt durch Umsatz von mehrwertigen, vorzugsweise zweiwertigen Alkoholen, Phenolen (Diphenylolalkanen) und/oder Hydrierungsprodukten dieser Phenole mit entsprechenden bifunktionellen Epoxiden, insbesondere Epichlorhydrin. Als mehrwertige Phenole sind beispielsweise zu nennen: Resorcin, Hydrochinon, 2,2-Bis-(4-hydroxyphenyl)-propan (Bisphenol A), Isomerengemische des Dihydroxyphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenol, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u.a. Bisphenol A ist hierbei besonders bervorzugt. Bezüglich weiter geeigneter Epoxidverbindungen (a) sei auf die EP-Offenlegungsschrift 272 595 sowie auf die DE-Offenlegungsschrift 3711947 verwiesen. Die Epoxidverbindungen (a) können als solche eingesetzt werden. Jedoch ist es häufig vorteilhaft, einen Teil der reaktionsfähigen Epoxidgruppen mit einem modifizierenden Material umzusetzen, um die Filmeigenschaften zu verbessern. Besonders bevorzugt ist hierher die Umsetzung der Epoxidgruppen mit einem Polyol.

Die Umsetzung von (B') und (D) geschieht in der Schmelze oder in Gegenwart eines, die Kondensation nicht störenden Lösungs(Verdünnungs)mittels bei erhöhten Temperaturen, im allgemeinen bei 110 bis 180 °C, vorzugsweise 120 bis 160 °C, zweckmäßigerweise in Gegenwart eines Katalysators. Als Katalysatoren kommen beispielsweise Phosphine, wie Trialkyl($C_1$-$C_6$)phosphine oder Triphenylphosphin, Phosphoniumsalze, wie z.B. Benzyltrimethylphosphoniumchlorid, tertiäre Amine, wie z.B. Benzyldimethylamin, quartäre Ammoniumsalze, wie z.B. Tetramethylammoniumchlorid, Alkalihydroxide, wie NaOH, LiOH, Alkalicarbonate, wie Natriumcarbonat, Lithiumcarbonat, Alkalisalze organischer Säuren, wie Natriumformiat und Lithiumbenzoat, in Betracht.

Geeignete Lösungsmittel sind zum Beispiel: Ethylenglykol-Mono- bzw. Diether, Propylenglykol-Mono- bzw. Diether, Butylenglykol-Mono- bzw. Diether von Monoalkoholen mit einem gegebenenfalls verzweigten Alkylrest von 1 bis 6 Kohlenstoffatomen, Tetrahydrofuran, aliphatische Alkohole mit gegebenenfalls verzweigten Alkylresten von 1 bis 12 Kohlenstoffatomen, wie Methanol, Ethanol, Propanol, Butanol, araliphatische und cycloaliphatische Alkohole wie Benzylalkohole oder Cyclohexanol, cycloaliphatische oder aromatische Kohlenwasserstoffe, wie Hexan, Heptan, Cyclohexan, Toluol, Xylole, Solvesso® oder Ketone, wie Aceton, Methylisobutylketon und Cyclohexanon. Der Siedepunkt dieser Lösungsmittel liegt bevorzugt nicht über 210 °C. Auch Gemische von verschiedenen Lösungsmitteln sind möglich.

Der Fortgang der Kondensationsreaktion zwischen (B') und (D) kann durch Viskosität, Schmelzpunkt und Gehalt an Epoxidgruppen, der nach Null geht, kontrolliert werden. Die Komponente (B') wird bei dieser Reaktion im Überschuß eingesetzt, sodaß in dem resultierenden Polyadditionsprodukt die zumeist höhermolekulareren langkettigen Struktureinheiten (d) die Brückenglieder bilden, welche die meist niedermolekulareren, kürzerkettigen Struktureinheiten (b) miteinander verknüpfen. Im allgemeinen werden dazu die Verbindungen (B') und (D) in solchen Mengen eingesetzt, daß das Äquivalentverhältnis der Epoxidgruppen von (D) und der damit reagierenden phenolischen OH-Gruppen von (B') zwischen 1:4 und 1:100, vorzugsweise 1:6 und 1:80 liegt, und ein (der größere) Teil von (B') nicht umgesetzt wird.

Unter Umständen kann es zweckmäßig sein, bei der Reaktion (B') und (D) sogenannte Kettenstopper zuzusetzen, d.h. monofunktionell reagierende Verbindungen, welche die Kette bei einer gewünschten Länge abbrechen. Hierfür kommen insbesondere Monoepoxidverbindungen, wie Propylenoxid, Hexenoxid oder Glycidylether, beispielsweise Phenylglycidylether, Kresylglycidylether, Ethylhexylglycidylether, Butylglydicylether in Betracht. Es ist auch möglich, (D) mit diesen Verbindungen vorab umzusetzen.

Nach dem erfindungsgemäßen Verfahren geschieht die Einführung von Carboxylgruppen und ggf. Methylolgruppen zum Erhalt des anionischen und weitgehend selbstvernetzenden Bindemittels (A) in einer zweiten Verfahrensstufe anschließend an die obenstehend beschriebene Polyadditionsreaktion. Hierzu wird das Reaktionsprodukt aus der ersten Verfahrensstufe in wässriger Lösung mit einer oder mehreren Halogencarbonsäuren zur Reaktion gebracht und ggf. vor, während oder nach dieser Reaktion mit Formaldehyd umgesetzt.

Die Halogencarbonsäure - dieser Begriff soll hier sowohl mono- als auch poly(di,tri)halogenierte Carbonsäuren umfassen - ist vorzugsweise eine aliphatische Carbonsäure und besitzt im allgemeinen 1 bis 6, vorzugsweise 1 bis 3 C-Atome in der Kette. Vorzugsweise handelt es sich hierbei um α-Brom- oder α-Chlorcarbonsäuren, wobei die Monohalogencarbonsäuren und insbesondere die Monochloressigsäure bevorzugt sind. Die Säuren können dabei auch in Form ihrer Salze, insbesondere Alkalisalze, wie auch als Gemische verwendet werden.

Wegen der thermischen Empfindlichkeit dieser Reaktionsprodukte werden die Umsetzungen zweckmäßigweise bei mittleren Temperaturen zwischen 30 und 90 °C, vorzugsweise zwischen 50 und 70 °C in organischen Lösemitteln wie zum Beispiel in den weiter oben genannten, insbesondere in Butanol, Aromaten oder deren Gemischen durchgeführt.

Für die Reaktion mit dem Aldehyd, insbesondere Formaldehyd, ist ein basischer Katalysator und für die jenige mit den Halogencarbonsäuren ein basisches Kondensationsmittel von Vorteil. Dabei ist es zweckmäßig, solche Katalysatoren zu wählen, die beide Bedingungen erfüllen. Dies ist beispielweise bei Natriumhydroxid oder Kaliumhydroxyd der Fall, die hierfür bevorzugt eingesetzt werden.

Die in dieser zweiten Reaktionsstufe entstandenen Salze werden nach der Bildungsreaktion mit Wasser ausgewaschen. Ein eventueller Überschuß an Kondensationsmitteln muß zuvor neutralisiert bzw. überneutralisiert werden. Die so erhaltenen Lösungen oder Dispersionen des Bindemittels (A) können, gegebenenfalls nach Verdünnen mit weiteren organischen Lösemitteln und Entfernen des Wassers und gegebenenfalls nach Zugabe üblicher Additive, als Lack- oder Imprägnierbindemittel verwendet werden. Zur Gewinnung des Bindemittels (A) in fester Form werden das oder die Lösungsmittel durch Destillation entfernt.

Um eine wäßrige Dispersion des Bindemittels (A) zu erhalten, wird dieses in die Salzform übergeführt. Dies erfolgt vorzugsweise mit Stickstoffbasen, wie Ammoniak oder Aminen, insbesondere tertiäre Aminen, z. B. Trialkylaminen mit 1 bis 12, vorzugsweise 1 bis 6 C-Atomen in jedem Alkylrest. Beispiele hierfür Trimethylamin, Triethylamin, Methyldiethylamin, Tripropylamin. Die Alkylreste können beispielsweise auch Hydroxylgruppen tragen, wie bei den Dialkylmonoalkanol-, Alkyldialkanol- und Trialkanolaminen.

Beispiele hierfür sind Dimethylethanolamin und Dimethylpropanolamin. Nach der Neutralisation mit der Base, die zweckmäßigerweise in wäßriger Form eingesetzt wird, ist das Bindemittel mit Wasser verdünnbar. Eventuell bei dem Herstellungsprozeß verwendete Lösemittel werden für die Herstellung der wässrigen Lösung nicht oder nur zum Teil benötigt. Sie können vor oder nach der Zugabe der Basen beispielsweise durch Destillation, Wasserdampfdestillation oder Extraktion teilweise oder weitgehend entfernt werden.

In den härtbaren Mischungen, insbesondere Lackzubereitungen, der Erfindung beträgt der Anteil an Bindemittel (A) im allgemeinen 2 bis 50 Gew.-%, vorzugsweise 5 bis 40 Gew.-%, bezogen auf die Gesamtmischung. Der Gesamtfeststoffgehalt (135°C/1h) dieser Mischungen liegt zumeist bei 2 bis 75 Gew.-%, vorzugsweise 5 bis 60 Gew.-%.

Als Verdünnungsmittel (E) kommen hier Wasser sowie die oben genannten organischen Lösungsmittel sowie entsprechende Mischungen in Frage. Zum Teil wirken diese Verdünnungsmittel gleichzeitig auch als Mittel zur Verbesserung der Filmbildung oder Herabsetzung der Koaleszenztemperatur. Hierzu gehören insbesondere Hochsieder, wie Glykolether, und vor allem solche, die wie Hexylglykol, n-Butyl-Propylglykol, Isobutyl-Dipropylenglykol etc., nur teilweise wasserverdünnbar sind.

Als übliche Zusatzstoffe im Sinne von (F), die eventuell in der erfindungsgemäßen Mischung vorhanden sein können, seien hier beispielsweise die üblichen Lackadditive, wie Pigmente, Pigmentpasten, Antioxidantien, Verlauf- bzw. Verdickungsmittel, Entschäumer und/oder Netzmittel, Reaktivverdünner, Füllstoffe, Härtungs-Katalysatoren, Härter und weiter härtbare Harze, udgl. genannt. Diese Zusatzstoffe (F) können der härtbaren Mischung gegebenenfalls erst unmittelbar vor der Verarbeitung zugegeben werden.

Im Falle des bevorzugten Einsatzes der erfindungsgemäßen härtbaren Mischungen für den Lebensmittelsektor kann üblicherweise ein Großteil der vorstehend genannten Zusatzstoffe (F) entfallen.

Als zusätzliche Härter für die Bindemittel (A), die überwiegend selbstvernetzend sind (und thermisch vernetzen) können Aminharze, wie Harnstoff-, Melamin-, Dicyandiamid- oder Guanaminharze usw. dienen. Es können aber auch andere selbsthärtende Stoffe, zum Beispiel Phenolresole oder Alkylphenolresole verwendet werden. Geeignet sind auch Hexamethylentetramin oder andere Formaldehyd-Spender. Zur Beschleunigung der Vernetzungsreaktion können Vernetzungskatalysatoren verwendet werden. Hierfür kommen insbesondere Säuren, wie zum Beispiel Phosphorsäure, Oxalsäure zur Verwendung. In wäßrigen Systemen ist es zweckmäßig, diese Säuren mit dem gleichen Kation, mit dem das Gesamtharz vernetzt wurde, zu neutralisieren.

Zusätzliche härtbare Harze sind beispielsweise die im Lackmedium löslichen oder dispergierbaren Harze auf Basis von Hydroxylalkylacrylestern, Hydroxyalkyden, Polyestern, Epoxidharzen und dergleichen.

Weiterhin sind hier als Zusatzstoffe (F) auch Verbindungen zu nennen, welche die anionisierende Wirkung der Neutralisationsmittel (Stickstoffbasen) aufheben und welche die physikalische Trocknung unterstützen. Dies ist insbesondere bei Einsatz der erfindungsgemäßen Mischungen bei Raumtemperatur oder darunter von Bedeutung. Genannt seien hier beispielsweise Oxoverbindungen oder Stoffe, die diese abspalten, wie zum Beispiel Harnstoffharze, Melaminharze, Dicyandiamidharze etc.

Die härtbaren Mischungen der Erfindung eignen sich, wie erwähnt, besonders für die Innenlackierung von Lebensmittel- oder Getränkebehältern, wobei sie infolge ihres anionischen Charakters dem Angriff saurer Füllgüter besonders gut widerstehen. Bei der Vernetzung werden physiologisch bedenkliche Substanzen, wie Phenol und Formaldehyd, nicht oder nur in Spuren freigesetzt. In Form von wäßrigen Systemen (Wasserlacke), die keine oder maximal bis zu 20 Gew.-%, vorzugsweise bis zu 15 Gew.-% organische Hilfslösemittel enthalten, tritt keine oder nur geringfügige Freisetzung von organischen Stoffen ein.

Daneben können die erfindungsgemäßen Mischungen auch zur Herstellung von Überzügen für andere Anwendungsgebiete, wie Druckplatten, zur Verbesserung der Haftung von Fasern, zum Beispiel an Gummi sowie als Imprägniermittel für poröse oder fasrige Substrate eingesetzt werden. Sie eignen sich auch für solche Anwendungen, bei denen keine thermische Behandlung der Beschichtung erfolgt oder möglich ist.

Die Abscheidung erfolgt auf dem Substrat, wie Metall, Holz, Glas, Beton, Kunststoff, Keramik etc., nach herkömmlichen Methoden, wie Streichen, Spritzen, Tauchen, Aufwalzen oder elektrophoretisch (Elektrotauchlackierung). Die Überzüge werden, sofern keine Härter für die Kalthärtung mitverwendet werden, durch Erhitzen auf 100 bis 250 °C für eine zum Aushärten ausreichende Zeit, im allgemeinen etwa fünf Minuten bis etwa eine Stunde, gehärtet.

In den nachstehenden Beispielen bedeutet % jeweils Gewichtsprozent und Teile jeweils Gewichtsteile. Die Viskosität wurde stets bei Raumtemperatur mit dem Brookfield-Viskosimeter gemessen.

**Beispiel 1:**

**I. Herstellung des Bindemittels (A)**

a) In einem Reaktionsgefäß, das mit Thermometer, Rührer, Rückflußkühler, absteigenden Kühler und einer Einrichtung zur Verminderung des Drucks versehen war, wurden 70 Teile Phenol, 0,4 Teile Maleinsäureanhydrid sowie 32,2 Teile 30 %-ige wässrige Fomaldehydlösung 3 Stunden am Rückfluß gekocht. Anschließend wurden die flüchtigen Anteile unter vermindertem Druck bis zu einer Sumpftemperatur von 220°C abdestilliert. Im Reaktionsgefäß verblieben 49,9 Teile eines Polymethylenpolyphenols mit einer Viskosität von 290 mPa.s/29°C, 50 %-ig in Ethylenglykolmonoethylether. Das gelchromatographisch bestimmte Zahlenmittel der Molekularmasseverteilung $\overline{M}_n$ betrug 461.

b) 40 Teile des Polymethylenpolyphenols gemäß a) wurden aufgeschmolzen, 0,02 Teile Dimethylaminopropylamin eingerührt und 60 Teile eines Epoxidharzes auf Basis von Diphenylolpropan und Epichlorhydrin mit einem Epoxidäquivalentgewicht von 1 950 (®Beckopox EP 307 der Hoechst AG) eingeschmolzen. Die Schmelze wurde unter Stickstoffabdeckung auf 140°C gebracht und diese Temperatur 8 Stunden gehalten. Der Erweichungspunkt (Kapillarmethode) des Reaktionsproduktes stieg auf 98°C an. Nach Ablauf der Reaktionszeit wurde der Ansatz mit 60 Teilen n-Butanol und 40 Teilen Xylol gelöst. Die Lösung wies eine Viskosität von 8250 mPa.s/20°C auf.

c) 124 Teile der erhaltenen Harzlösung gemäß b) wurden auf 60°C gebracht, 7,22 Teile Natronlauge (33 %-ig) sowie 6,44 Teile einer 37 %-igen wässrigen Formaldehydlösung zugegeben und der Ansatz bei 60°C gerührt, bis nach 3 Stunden der Gehalt an freiem Formaldehyd 0,1 % betrug. Danach wurden weitere 20,2 Teile Natronlauge sowie 9,77 Teile Monochloressigsäure zugegeben und der Ansatz bei 60°C gerührt, bis nach 4 bis 5 Stunden der Gehalt an Natriumhydroxid zwischen 0,35 und 0,4 % konstant geworden ist.

Anschließend wurde mit 24,59 Teilen 25 %-iger wässriger Schwefelsäure der Ansatz auf pH 2,0 bis 2,2 eingestellt. Nach Abtrennen der Unterlauge und der sich abscheidenen Kristalle wurde der Ansatz auf 75 bis 80°C erhitzt und mit 20 Teilen destilliertem Wasser gewaschen. Nach Abtrennen des Waschwassers wurde durch Vakuum-Umlaufdestillation bei 80°C entwässert und die Harzlösung durch Filtration von abgeschiedenen Feststoffen befreit.

Die erhaltene Harzlösung stellte ein Lackbindemittel für konventionellen Auftrag dar.

Zur Überführung in eine wasserverdünnbare Harzlösung wurden bei einem Druck von 20 mbar und einer Sumpftemperatur von 80°C innerhalb von 3 Stunden die hierbei flüchtigen Lösemittel entfernt. Nach Zugabe von 60 Teilen entionisierten Wassers und 8,33 Teilen Dimethylpropanolamin (80 %-ig) fielen 180 Teile einer wäßrigen 40,5 %-igen Harzlösung (1 Stunde/135°C) an, die bei einem pH von 7,4 eine Viskosität von 240 mPa.s/20°C besaß.

Die Harzlösung enthielt 6,2 % n-Butanol, und 0,1 % Xylol. Freier Formaldehyd und Phenol lagen unter der Nachweisgrenze von 0,02 % Phenol und 0,01 % Formaldehyd.

Die Molekularmasseverteilung des Bindemittels (A) wurde unter Ausschluß der Lösemittel gegen Phenolharz-Eichstandard ermittelt. Das Zahlenmittel des Molekulargewichtes betrug 1 374, das Gewichtsmittel 12 765 und die Dispersität 9,290.

**II. Lacktechnische Prüfung:**

Nach Einrühren von 3,6 % Iso-Butyldipropylenglykolether wurde die Harzlösung gemäß I.c) mit weiterem Wasser auf eine Viskosität von 13,5 DIN-Sekunden (Düse 4) verdünnt, mit dieser Harzlösung durch Tauchlackieren verzinntes Stahlblech lackiert und die Lackierung 12 Minuten bei 200°C vernetzt. Die Lackierungen waren beim Näpfchentest sehr gut verformbar und bei der Prüfung auf Sterilisationsfestigkeit bei 120°C 1 Stunde lang gegen 2 %-ige Milchsäure beständig. Der eingebrannte Lackfilm war gegen Aceton und Methyl-Ethylketon beständig.

Analoge Ergebnisse werden erhalten bei Einsatz einer Harzlösung entsprechend I.c), wenn bei der Herstellung von (A) anstelle von Formaldehyd in der Stufe I.a) Isobutyr-, Valer- oder Hexylaldehyd verwendet werden.

**Beispiel 2:**

**I. Herstellung des Bindemittels (A)**

1186 Teile der nach Beispiel 1, Ib erhaltenen Lösung eines Polyadduktes aus Polymethylenpolyphenol, Epoxidharz (Beckopox EP 307) in n-Butanol und Xylol mit einer Viskosität von 8 250 mPa·s/20°C wurden bei 60°C mit 143 Teilen 33 %iger Natronlauge und 115 Teilen Natriumchloracetat drei Stunden gerührt, bis der Gehalt an Natriumhydroxid 0,5 % betrug. Dann wurden 100 Teile Wasser und 230 Teile n-Butanol zugegeben, mit 235 Teilen Schwefelsäure 25 %ig ein pH von 1,5 eingestellt und nach Absetzen der Unterlauge diese abgetrennt. Es wurde viermal mit 200 Teilen Wasser gewaschen, die Waschwässer abgetrennt und anschließend 100 Teile Xylol zugegeben. Reaktionen und Aufarbeitungsprozesse fanden sämtlich bei 60°C statt. Nach Abtrennen des letzten Waschwassers wurden am Vakuumumlauf bei einem Druck von 215 mbar 117 Teile Wasser ausgekreist. Es verblieben im Kolben 1 472 Teile einer 43,9 %igen Harzlösung mit einer Viskosität von 1 000 mPa·s/20°C und einer Säurezahl von 31,3.

## II. Lacktechnische Prüfung:

85 Teile Harz gemäß I wurden mit 110 Teilen Methoxypropanol verdünnt und durch Tauchlackieren Filme von 7 µm Schichtdicke auf Weißblech hergestellt. Die Lackfilme wurden 12 Minuten bei 200°C eingebrannt. Der eingebrannte Lackfilm war gegen Aceton und Methyl-Ethylketon (100 Doppel-Wischungen) beständig.

## Beispiel 2a:

Beispiel 2 wurde mit 100 Teilen Natriumchloracetat wiederholt. Nach dem Einbrennen verhielten sich die Lackfilme wie die aus Beispiel 2.

## Beispiel 2b:

Beispiel 2 wurde mit 130 Teilen Natriumchloracetat wiederholt. Der Zusatz an Natronlauge wurde von 143 Teilen auf 170 Teile erhöht. Die eingebrannten Lackfilme verhielten sich wie die aus Beispiel 2.

## Beispiel 3:

## I. Herstellung des Bindemittels (A)

a) 792 Teile 2,6-Dimethylol-4-Isooctylphenol wurden in 400 Teilen Xylol gelöst und 1 261 Teile Phenol zugegeben. Die Mischung wurde bei einer Temperatur bis 170°C am Umlauf entwässert. Dabei fielen 143 Teile Wasser an. Aus der Harzlösung wurde während einer Stunde bei 190°C zunächst das Lösemittel und dann bei einem Vakuum von 82 mbar das überschüssige Phenol destilliert. Es verblieben 1 160 Teile eines Octylphenol-Phenolmischnovolaks mit einem Schmelzpunkt von 73°C und mit einer Viskosität von 119 mPa·s/20°C 1 : 1 Ethylenglykol.

b) 750 Teile dieses so erhaltenen Harzes wurden gemeinsam mit 750 Teilen des Epoxidharzes aus Beispiel 1, Ib aufgeschmolzen, zur Schmelze 0,45 Teile Dimethylaminopropylamin gegeben und unter Stickstoffabdeckung auf 160°C erwärmt. Diese Temperatur wurde sieben Stunden gehalten und dann der Ansatz in 900 Teilen n-Butanol und 600 Teilen Xylol gelöst. Vor der Zugabe des Lösemittels hatte das Harz einen Schmelzpunkt von 90°C. Die Lösung fiel mit einem Gehalt von 51,2 % (1 h/135°C) und einer Viskosität von 2 350 mPa·s mit einer Ausbeute von 2 970 Teilen an.

c) 2 371 Teile dieser Lösung wurden bei 60°C mit 138 Teilen Natronlauge und 135 Teilen wäßrigem Formaldehyd (37 %ig) versetzt und bei dieser Temperatur sechs Stunden gerührt, bis der Gehalt an freiem Formaldehyd 0,5 % betrug. Dann wurden weitere 170 Teile Natronlauge (33 %ig) sowie 253 Teile Natriumchloracetat zugegeben und weitere sechs Stunden gerührt. Nach dieser Zeit betrug der Gehalt an freiem Formaldehyd 0,2 % und der Gehalt an Natriumhydroxid 0,4 %. Zum Ansatz wurden bei 60°C 200 Teile Wasser sowie 460 Teile n-Butanol gegeben und der Ansatz mit 585 Teilen Schwefelsäure 25 %ig auf pH 1,3 eingestellt. Nach Abtrennen der Unterlauge wurde der Ansatz viermal mit je 395 Teilen Wasser gewaschen und die Trennwässer abgetrennt. Die Reaktionen, Neutralisations- und Trennprozesse fanden allesamt bei 60°C statt. Nach Abtrennen des letzten Waschwassers verblieben im Reaktionsgefäß 2 921 Teile einer 44,1 %igen (1 h/135O°C) Harzlösung mit einer Säurezahl von 30,4.

1 455 Teile der erhaltenen Harzlösung wurden mit 948 Teilen Wasser versetzt und bei einem Vakuum von 200 mbar bei einer Sumpftemperatur von 80°C und einer Badtemperatur von 100°C die unter diesen Bedingungen flüchtige Anteile abdestilliert. Es fielen 656 Teile einer organischen Phase und 347 Teile einer wäßrigen Phase an. Nach beendeter Destillation wurden zu der Harzsuspension 63,3 Teile Dimethylethanolamin gegeben und mit weiteren 300 Teilen Wasser ein Rückstand von 39,2 % (1 h/135°C) eingestellt. Der pH dieser wäßrigen Lösung betrug 8,0. Es fielen 1 755 Teile der wäßrigen Harzlösung an, die eine Viskosität von 2 730 mPa·s/23°C hatte. Die Ausbeute betrug 1 755 Teile.

## II. Lacktechnische Prüfung

Die Harzlösung wurde mit Wasser auf eine Viskosität von 15 DIN-Sekunden (Düse 4) eingestellt und damit Weißblech wie im Beispiel 1.II lackiert. Die Filme erwiesen sich als elastisch und gut vernetzt und entsprachen insofern denen aus Beispiel 1.

## Beispiel 3a

Es wurde wie im Beispiel 3 verfahren, aber in der ersten Stufe statt 798 Teilen 3,6-Dimethylol-4-Isooctylphenol 630 Teile 2,6-Dimethylol-4-Paratertiärbutylphenol verwendet. Die analog durchgeführten Reaktionen und Prüfungen führten zum gleichen Ergebnis wie in Beispiel 3.

## Beispiel 3b

Es wurde wie in Beispiel 3a verfahren, aber Dimethylolparatertiärbutylphenol durch die äquivalente Menge Dimethylol-Parakresol ersetzt.

**Beispiel 3c**

Es wurde wie in Beispiel 3a verfahren, aber Dimethylol-Paratertiärbutylphenol durch die äquivalente Menge 2,6-Dimethylol-Isononylphenol ersetzt.

**Patentansprüche**

1. Verfahren zur Herstellung eines Bindemittels (A), das Hydroxylgruppen und Carboxylgruppen enthält, wobei das Bindemittel (A) im wesentlichen besteht aus einer Mischung aus

   - Polyalkylidenpolyphenolen (B) mit mittleren Kondensationsgraden von 2,3 bis 8,0 und mittleren Molekulargewichten $M_n$ von 250 bis 1000, wobei diese Polyalkylidenpolyphenole (B) phenolische OH-Gruppen und Carboxylgruppen enthalten, und
   - Polyadditionsprodukten (C), enthaltend Struktureinheiten (d), die sich ableiten von Epoxidverbindungen (D), die im Mittel mindestens zwei (1,2-)Epoxidgruppen pro Molekül enthalten und ein mittleres Molekulargewicht $M_n$ von 600 bis 10000 aufweisen, und Struktureinheiten (b), die sich von Polyalkylidenpolyphenolen (B') ableiten, wobei diese Polyadditionsprodukte (C) mittlere Molekulargewichte M, von mindestens 1 100 besitzen,

   dadurch gekennzeichnet, daß man in der ersten Stufe Methylolgruppen-freie Polyalkylidenpolyphenole (B'), bei deren Herstellung aus Phenolen und Aldehyden das jeweilige Phenol im Überschuß eingesetzt wird, und die Epoxidverbindungen (D) in der Schmelze oder in Gegenwart eines Verdünnungsmittels und gegebenenfalls in Gegenwart eines Katalysators bei erhöhten Temperaturen soweit umsetzt, bis der Epoxidgruppengehalt gegen Null geht, wobei das Äquivalentverhältnis der Epoxidgruppen von (D) und der phenolischen Hydroxylgruppen von (B') zwischen 1:4 und 1:100 liegt, und daß dann in einer zweiten Stufe das erhaltene Produkt mit einer Halogencarbonsäure und gegebenenfalls mit Formaldehyd in Anwesenheit eines basischen Katalysators und gegebenenfalls eines Lösungsmittels zur Reaktion gebracht und anschließend das so erhaltene Bindemittel (A) isoliert wird.

2. Verfahren nach Anspruch 1, dadurch gekennzeichnet, daß die Carboxylgruppen des Bindemittels (A) durch Neutralisation mit Basen in Salzform überführt werden.

3. Verfahren nach Anspruch 2, dadurch gekennzeichnet, daß Ammoniak oder Amine zur Neutralisation verwendet werden.

4. Verfahren nach Anspruch 1, dadurch gekennzeichnet, daß die Umsetzung der Epoxidverbindungen (D) mit den Polyalkylidenphenolen (B') bei Temperaturen von 110 bis 180 °C, und die Umsetzung in der zweiten Stufe mit Halogencarbonsäure bei Temperaturen von 30 bis 90 °C erfolgt.

5. Verfahren nach Anspruch 1, dadurch gekennzeichnet, daß das Äquivalentverhältnis zwischen Epoxidgruppen zu phenolischen Hydroxylgruppen zwischen 1:6 und 1:80 liegt.

6. Verfahren nach Anspruch 1, dadurch gekennzeichnet, daß als Halogencarbonsäure Monochloressigsäure eingesetzt wird.

7. Verfahren zur Herstellung eines wasserverdünnbaren Bindemittels (A), wobei in der ersten Stufe Methylolgruppen-freie Polyalkylidenpolyphenole (B'), bei deren Herstellung aus Phenolen und Aldehyden das jeweilige Phenol im Überschuß eingesetzt wird, und Epoxidverbindungen (D), die im Mittel mindestens zwei (1,2-)Epoxidgruppen pro Molekül enthalten und ein zahlenmittleres Molekulargewicht von 600 bis 10000 aufweisen, in der Schmelze oder in Gegenwart eines Verdünnungsmittels und gegebenenfalls in Gegenwart eines Katalysators bei erhöhten Temperaturen soweit umgesetzt werden, bis der Epoxidgruppengehalt gegen Null geht, wobei das Äquivalentverhältnis der Epoxidgruppen von (D) und der phenolischen Hydroxylgruppen von (B') zwischen 1:4 und 1:100 liegt, und daß dann in einer zweiten Stufe das erhaltene Produkt mit einer Halogencarbonsäure und gegebenenfalls mit Formaldehyd in Anwesenheit eines basischen Katalysators und gegebenenfalls eines Lösungsmittels zur Reaktion gebracht wird, und anschließend die Carboxylgruppen mit wäßriger Base neutralisiert werden, dadurch gekennzeichnet, daß vor oder nach der Zugabe der wäßrigen Base die bei der Synthese verwendeten Lösungsmittel durch Destillation, Extraktion oder Wasserdampfdestillation entfernt werden.

8. Bindemittel, erhältlich nach dem Verfahren gemäß Anspruch 1.

9. Bindemittel, erhältlich nach dem Verfahren gemäß Anspruch 1, dadurch gekennzeichnet, daß seine Hydroxylzahl 100 bis 540 mg KOH/g und seine Säurezahl 10 bis 250 mg KOH/g beträgt.

10. Bindemittel, erhältlich nach dem Verfahren gemäß Anspruch 1, dadurch gekennzeichnet, daß der Anteil von (B) 15 bis 70 % des Gewichts des Bindemittels (A) beträgt.

11. Härtbare Mischungen, enthaltend Bindemittel erhältlich nach dem Verfahren gemäß Anspruch 1.

12. Härtbare Mischungen nach Anspruch 11, die zusätzlich Härter ausgewählt aus Harnstoff-Melamin-, Dicyandiamid- und Guanaminharzen, Phenolresolen und Alkylphenolresolen, und Formaldehydspendern enthalten.

## Claims

1. A process for preparing a binder (A) comprising hydroxyl groups and carboxyl groups and consisting essentially of a mixture of

   - polyalkylidenepolyphenols (B) having average degrees of condensation of from 2.3 to 8.0 and average molecular weights $M_n$ of from 250 to 1000 and comprising phenolic OH groups and carboxyl groups, and
   - polyaddition products (C) comprising structural units (d) derived from epoxy compounds (D) comprising on average at least two 1,2-epoxide groups per molecule and having an average molecular weight $M_n$ of from 600 to 10,000 and structural units (b) derived from polyalkylidenepolyphenols (B'), said polyaddition products (C) possessing average molecular weights $M_n$ of at least 1100,

   which comprises in the first stage reacting methylol-free polyalkylidenepolyphenols (B') in whose preparation from phenols and aldehydes the respective phenol is employed in excess and the epoxy compounds (D), in the melt or in the presence of a diluent and in the presence or absence of a catalyst at elevated temperatures, to an extent such that the content of epoxide groups is close to zero, the ratio of equivalents of the epoxide groups of (D) to the phenolic hydroxyl groups of (B') lying between 1:4 and 1:100, and comprises then in a second stage reacting the resulting product with a halocarboxylic acid with or without formaldehyde in the presence of a basic catalyst with or without a solvent and then isolating the resulting binder (A).

2. The process as claimed in claim 1, wherein the carboxyl groups of the binder (A) are converted to salt form by neutralization with bases.

3. The process as claimed in claim 2, wherein ammonia or amines are used for neutralization.

4. The process as claimed in claim 1, wherein the reaction of the epoxy compounds (D) with the polyalkylidenepolyphenols (B') takes place at temperatures from 110 to 180°C and the reaction in the second stage with halocarboxylic acid takes place at temperatures from 30 to 90°C.

5. The process as claimed in claim 1, wherein the ratio of equivalents of epoxide groups to phenolic hydroxyl groups lies between 1:6 and 1:80.

6. The process as claimed in claim 1, wherein monochloroacetic acid is employed as halocarboxylic acid.

7. A process for preparing a water-dilutable binder (A) whose first stage involves reacting methylol-free polyalkylidenepolyphenols (B') in whose preparation from phenols and aldehydes the respective phenol is employed in excess and epoxy compounds (D) comprising on average at least two 1,2-epoxide groups per molecule and having a number-average molecular weight of from 600 to 10,000, in the melt or in the presence of a diluent and in the presence or absence of a catalyst at elevated temperatures, to an extent such that the content of epoxide groups is close to zero, the ratio of equivalents of the epoxide groups of (D) to the phenolic hydroxyl groups of (B') lying between 1:4 and 1:100 and whose second stage involves reacting the resulting product with a halocarboxylic acid with or without formaldehyde in the presence of a basic catalyst with or without a solvent, and then neutralizing the carboxyl groups with an aqueous base, n wherein before or after the addition of the aqueous base the solvents used in the synthesis are removed by conventional distillation, extraction, or steam distillation.

8. A binder obtainable by the process as claimed in claim 1.

9. A binder obtainable by the process as claimed in claim 1 whose hydroxyl number is from 100 to 540 mg of KOH/g and whose acid number is from 10 to 250 mg of KOH/g.

10. A binder obtainable by the process as claimed in claim 1, wherein the proportion of (B) is from 15 to 70% of the weight of the binder (A).

11. A curable mixture comprising binders obtainable by the process as claimed in claim 1.

12. The curable mixture as claimed in claim 11, additionally comprising curing agents selected from urea, melamine, dicyandiamide and guanamine resins, phenol resols and alkylphenol resols, and formaldehyde donors.

## Revendications

1. Procédé pour la préparation d'un liant (A) qui contient des groupes hydroxyle et des groupes carboxyle, le liant (A) étant essentiellement constitué d'un mélange

   - de polyalkylidène-polyphénols (B) avec un degré moyen de condensation de 2,3 à 8,0 et une masse molaire moyenne Mn de 250 à 1 000, ces polyalkylidène-polyphénols (B) contenant des groupes OH et des groupes carboxyle, et
   - de produits de polyaddition (C), contenant des unités de structure (d) dérivant des composés époxydes (D), qui contiennent en moyenne au moins deux groupes (1,2-)époxyde par molécule et présentent une masse molaire moyenne Mn de 600 à 10 000, et des unités de structure (b), qui dérivent des polyalkylidène-polyphénols (B'), ces produits de polyaddition (C) ayant une masse molaire moyenne Mn d'au moins 1 100,

   caractérisé en ce que, dans la première étape, on fait réagir des polyalkylidène-polyphénols (B') exempts groupes méthylol, que l'on prépare à partir de phénols et d'aldéhydes en utilisant le phénol respectif en excès, et les composés époxy (D) en fusion ou en présence d'un diluant et éventuellement en présence d'un catalyseur à température élevée jusqu'à ce que la teneur en groupes époxy devienne zéro, le rapport des équivalents des groupes époxy de (D) et des groupes hydroxyle de (B') étant compris entre 1:4 et 1:100, et en ce que, dans une seconde étape, on fait réagir le produit obtenu avec un acide halogénocarboxylique et éventuellement avec du formaldéhyde en présence d'un catalyseur basique et éventuellement d'un solvant, puis on isole le liant (A) ainsi obtenu.

2. Procédé selon la revendication 1, caractérisé en ce que l'on transforme les groupes carboxyle du liant (A) en forme salifiée par neutralisation avec des bases.

3. Procédé selon la revendication 2, caractérisé en ce que l'on utilise l'ammoniac ou des amines pour la neutralisation.

4. Procédé selon la revendication 1, caractérisé en ce que l'on met en oeuvre la réaction des composés époxyde (D) avec les polyalkylidènephénols (B') à une température de 110 à 180 °C, et la réaction dans la seconde étape avec l'acide halogénocarboxylique à une température de 30 à 90 °C.

5. Procédé selon la revendication 1, caractérisé en ce que le rapport des équivalents des groupes époxyde aux groupes hydroxyle phénolique est compris entre 1:6 et 1:80.

6. Procédé selon la revendication 1, caractérisé en ce que l'on utilise l'acide monochloracétique comme acide halogénocarboxylique.

7. Procédé pour la préparation d'un liant (A) diluable à l'eau, en faisant réagir, dans la première étape, des polyalkylidènepolyphénols (B') exempts de groupes méthylol, que l'on prépare à partir de phénols et d'aldéhydes en utilisant le phénol respectif en excès, et des composés époxyde (D) qui contiennent en moyenne au moins deux groupes (1,2-)époxyde par molécule et présentent une masse molaire moyenne en nombre de 600 à 10 000, en fusion ou en présence d'un diluant et éventuellement en présence d'un catalyseur, à température élevée, jusqu'à ce que la teneur en groupe époxy devienne zéro, le rapport des équivalents des groupes époxyde de (D) et des groupes hydroxyle phénolique de (B') étant compris entre 1:4 et 1:100 et ensuite, dans une seconde étape, on fait réagir le produit obtenu avec un acide halogénocarboxylique et éventuellement avec du formaldéhyde en présence d'un catalyseur basique et éventuellement d'un solvant, et ensuite, on neutralise les groupes carboxyle avec une base aqueuse, caractérisé en ce que, avant ou après l'addition de la base aqueuse, on élimine les solvants utilisés dans la synthèse par distillation, extraction ou entraînement à la vapeur.

8. Liant que l'on peut obtenir selon le procédé selon la revendication 1.

9. Liant que l'on peut obtenir selon le procédé selon la revendication 1, caractérisé en ce que son indice d'hydroxyle est de 100 à 540 mg KOH/g et son indice d'acide de 10 à 250 mg KOH/g.

10. Liant que l'on peut obtenir selon le procédé selon la revendication 1, caractérisé en ce que le taux de (B) représente de 15 à 70 % du poids du liant (A).

11. Mélanges durcissables, contenant des liants que l'on peut obtenir selon le procédé selon la revendication 1.

12. Mélanges durcissables selon la revendication 11, qui contiennent en plus des durcisseurs pris dans le groupe comportant des résines d'urée, de mélamine, de diacyanodiamide et de guanamine, des phénolrésols et des alkylphénolrésols, et des donneurs de formaldéhyde.